# EUROPÄISCHE PATENTSCHRIFT

(11) **EP 2 153 091 B1**
(45) Veröffentlichungstag und Bekanntmachung des Hinweises auf die Patenterteilung: **22.08.2012**
(21) Anmeldenummer: 08748756.7
(22) Anmeldetag: 15.04.2008
(51) Int. Cl.: F16J 9/06, F16J 9/20

(54) **ÖLABSTREIFRING**
OIL WIPER RING
SEGMENT RACLEUR D'HUILE

(30) Priorität: 13.06.2007 DE 102007027815
(43) Veröffentlichungstag der Anmeldung: 17.02.2010
(60) Teilanmeldung: 12004842.6
(73) Patentinhaber: Federal-Mogul Burscheid GmbH, 51399 Burscheid (DE)
(72) Erfinder: ESSER, Peter-Klaus, 51515 Kürten (DE); BÄRENREUTER, Dirk, 51519 Odenthal (DE)
(74) Vertreter: Döpp, Ludger
(86) Internationale Anmeldenummer: PCT/DE2008/000665
(87) Internationale Veröffentlichungsnummer: WO 2008/151589

(56) Entgegenhaltungen:
- EP-A- 1 557 594
- DE-A1- 2 324 931
- DE-A1- 4 236 641
- DE-T2- 60 302 321
- JP-A- 9 196 172
- US-A- 2 657 962

## Beschreibung

Die Erfindung betrifft einen Ölabstreifring gemäß gattungsbildendern Teil des ersten Patentanspruchs.

Die DE 42 36 641 A offenbart einen Ölabstreifring für Verbrennungsmotoren, der in einer Nut eines sich hin- und herbewegenden, sich in einem Motorzylinder bewegenden Kolbens befestigt ist und eine äußere Lauffläche aufweist, welche konstant gegen die Wand eines Zylinders durch die Wirkung einer in der Kolbennut vorgesehenen federartigen Expandiereinrichtung gedrückt wird, wobei die äußere Lauffläche von wenigstens zwei ringförmigen Bereichen (Laufstegen) definiert ist, welche konzentrisch sind, denselben Durchmesser aufweisen und durch Umfangsausnehmungen der äußeren Wand des Ringes getrennt sind, wobei jeder ringförmige Bereich der äußeren Lauffläche nach oben und innen geneigt ist, um eine Oberfläche konischer Gestalt zu definieren.

In der DE 2 324 931 A sind ein Verfahren und eine Vorrichtung zur Herstellung von chromplattierten Kolbenschlitzringen beschrieben. Der als Ölabstreifring einsetzbare Kolbenring weist zwei Laufflächenstege auf, die unterschiedlich ausgebildete geometrische Strukturen aufweisen und mit einer Laufflächenschicht versehen sind.

In der JP 9-196172 A wird ein Ölabstreifring beschrieben, der einen Grundkörper beinhaltet, der mit mindestens einem Laufflächensteg versehen ist, wobei der Grundkörper mit einem radial nach außen wirkenden Federelement in Wirkverbindung steht. Der jeweilige Laufflächensteg läuft in Richtung seines freien Endes konisch zu und kann im Bereich seines freien Endes mit unterschiedlichen Konturen (Radien, Abschrägungen oder dergleichen) versehen sein.

Der DE 603 02 321 T2 ist ein zusammengesetzter Ölring zu entnehmen, beinhaltend eine obere und eine untere Schiene sowie ein Federelement, wobei die obere und die untere Schiene des Ölrings äußere umfängliche bzw. umlaufende Oberflächen hat. Die äußere umfängliche Oberfläche der oberen Schiene weist eine asymmetrische rohr- bzw. fassgebogene Oberfläche auf, derer höchster Punkt an der unteren Seite axial von der Mitte der axialen Schienenbreite angeordnet ist. Die äußere umfängliche Oberfläche der unteren Schiene weist eine asymmetrisch abgebogene Oberfläche auf, derer höchster Punkt an der unteren Seite axial von der Mitte der axialen Schienenbreite angeordnet ist.

Durch die EP 1 557 594 A1 ist ein Ölring bekannt geworden, der zwei Laufflächenstege beinhaltet, wobei die Laufflächenstege eine spiegelbildlich zueinander ausgebildete geometrische Kontur aufweisen.

Dies gilt in gleicher Weise auch fiir die US 2,657,962, wobei hier ebenfalls spiegelbildlich zueinander ausgebildete Laufflächenstege erkennbar sind.

Ölabstreifringe dienen im Bereich einer Brennkraftmaschine dazu, den Ölverbrauch der Verbrennungskraftmaschine zu minimieren. Wie aus dem Stand der Technik erkennbar, sind eine Reihe von konstruktiven Ausgestaltungen bekannt, die diesem Ziel dienen sollen, jedoch nicht immer optional wirksam sind.

Der Erfindung liegt die Aufgabe zugrunde, einen (Ölabstreifring dahingehend weiter zu bilden, dass er ein verbessertes Ölabstreifverhalten, über die Standzeit gesehen, aufweist.

Diese Aufgabe wird dadurch gelöst, dass sich die Lauflächenstage radial im Richtung ihres einer Gegenlauffläche zuge wandten Emdes, vom Grundkörper ausgehend, unter einem vorgebbaren Winkel komisch verjüngem und dass die Winkel unterschiedlich sind.

Vorteilhafte Weiterbildungen des Erfindungsgegenstandes sind den Unteransprüchen zu entnehmen.

Mit dem erfindungsgemäßen Ölabstreifring wird eine geometrische Kontur bereit gestellt, die bedarfsweise mit einer verschleißfesten Schicht, wie insbesondere einer Chromschicht, versehen ist.

Gegenüber dem Stand der Technik wird somit neben dem optimierten Ölabstreifverhalten auch noch eine vereinfachte Prozesskette und ein damit einerhergehender Kostenvorteil herbeigeführt.

Mit dem Erfindungsgegenstand gehen folgende Vorteile einher:
- Linienberührung des/der Laufflächenstege(s) zu Beginn des motorischen Betriebes, daher hohe Oberflächenpressung und gutes Abstreifverhalten im Einlaufzustand
- keine scharfen Kanten im Bereich des freien Endes des jeweiligen Laufflechensteges, welche zu Beschädigungen der Gegenlauffläche, insbesondere an Zylinderlaufbüchsen, führen können
- im motorischen Betrieb bildet sich ein Tragspiegel aus, welcher auch nach längerer Laufzeit verhältnismäßig schmal ist.

Die gewollte Konizität der Laufflächenstege wirkt sich positiv auf den Ölverbrauch aus.

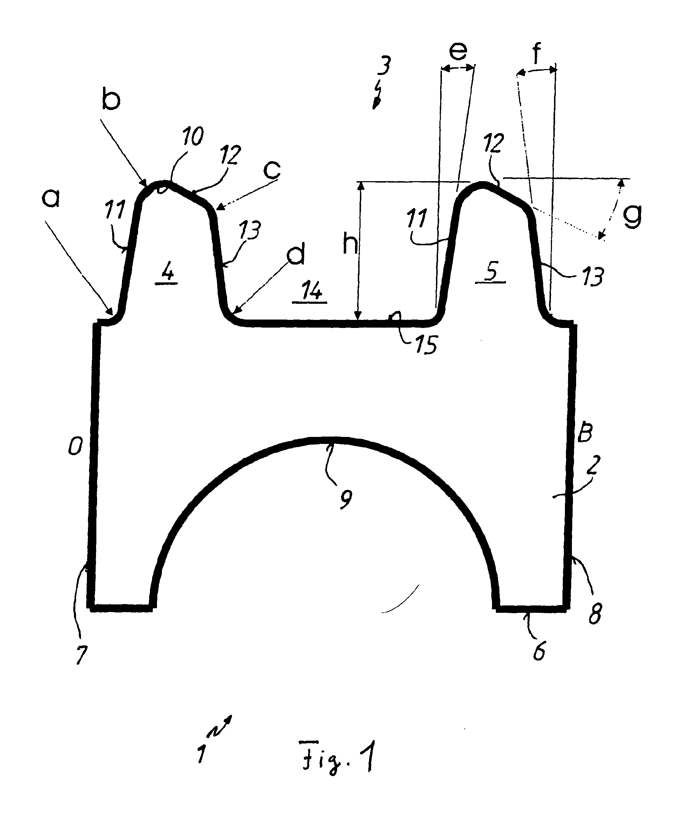

Der Erfindungsgegenstand ist anhand eines Ausführungsbeispiels in der Zeichnung dargestellt und wird wie folgt beschrieben.

Die einzige Figur zeigt einen Ölabstreifring 1, der in diesem Beispiel als Gussring ausgebildet ist. Ohne den Schutzbereich zu verlassen, kann hier auch ein Stahlring eingesetzt wreden. Der Ölabstreifring 1 beinhaltet einen Grundkörper 2 mit einer radial äußeren Lauffläche 3, gebildet durch zwei Laufflächenstege 4,5, einer inneren Umfangsfläche 6, einer oberen Flanke 7 und einer unteren Flanke 8. Die innere Umfangsfläche 6 beinhaltet einen Nutbereich 9, der zur Aufnahme eines nicht weiter dargestellten Federelementes dient.

Da keine peripheren Bauteile dargestellt sind, soll die Flanke 7 zu einem Ölraum O und die Flanke 8 zu einem Brennraum B weisen. Beide Laufflächenstege 4,5 sind in diesem Beispiel geometrisch identisch ausgeführt, wobei auch andersartige Konturen denkbar sind. Ausgehend von der Flanke 7, ist ein Übergangsbereich mit einem Radius a vorgesehen, der in einen sich in Richtung des Endbereiches 10 konisch verjüngenden Schenkel 11 übergeht. Das freie Ende 10 des Laufflächensteges 4 wird gebildet durch einen Übergangsbereich mit einem Radius b, der anschließend in einen in Richtung des Brennraumes B abgeschrägten (abfallenden) Bereich 12 übergeht. Am Ende des abgeschrägten Bereiches 12 ist ein weiterer Übergangsbereich mit einem Radius c gegeben, der in einen sich ebenfalls konisch in Richtung des Grundkörpers 2 erstreckenden Schenkel 13 übergeht. Grundkörperseitig ist ein weiterr Übergangsbereich mit einem Radius d vorgesehen. Der Laufflächensteg 5 ist in diesem Beispiel analog zum Laufflächensteg 4 ausgebildet, wobei dies kein zwingendes Kriterium ist. Der dem Ölraum O zugewandte Konuswinkel des Schenkels 11 ist mit e angegeben. Der dem Brennraum B zugewandte Konuswinkel des Schenkels 13 ist mit f angegeben. Der abgeschrägte Bereich 12 verläuft zwischen dem freien Ende 10 und dem Schenkel 13 unter einem Winkel g.

Zwischen den beabstandeten Laufflächenstegen 4,5 wird somit eine Nut 14 gebildet, die als Ölreservoir dient. Hier nicht dargestellt, jedoch denkbar, sind radial verlaufende Ölkanäle zwischen dem Nutgrund 15 und dem Nutbereich 9. Die Laufflächenstege 4,5 sind in diesem Beispiel mit gleichen Höhen h ausgeführt, was jedoch auch nicht zwangsläufig notwendig ist. Im Folgenden werden die geometrischen Beziehungen des Ölabstreifringes 1 näher erläutert:
- a: R 0,05 bis 0,20 mm
- b: R 0,05 bis 0,20 mm (insbesondere R 0,10 bis 0,15 mm
- c: R 0,05 bis 0,20 mm
- d: R 0,05 bis 0,20 mm
- e: 0,5 bis 15° (vorzugsweise 8 bis 12°)
- f: 5 bis 15° (vorzugsweise 8 bis 12°)
- g: 0,5 bis 50° (vorzugsweise 25 bis 40°)
- h: 0,2 bis 0,8 mm (vorzugsweise 0,3 bis 0,6 mm).

Die Winkel e und f sind in diesem Beispiel geringfügig unterschiedlich ausgebildet.

Zumindest die Laufflächenstege 4,5 können mit einer verschleißfesten Schicht, beispielsweise auf Basis von Chrom, beschichtet sein, wobei jedoch auch andersartige Beschichtungen, wie PVD oder dergleichen, denkbar sind.

Im Betriebszustand liegt somit der jeweilige Endbereich 10 an der nicht weiter dargestellten Gegenlauffläche an, wobei zunächst eine Linienberührung zwischen dem jeweiligen Endbereich 10 und der Gegenlauffläche gegeben ist. Dadurch wird eine hohe Oberflächenpressung und ein gutes Abstreifverhalten im Einlaufzustand bewirkt.

Im weiteren motorischen Betrieb wird im Bereich der freien Enden 10 ein Tragspiegel ausgebildet, welcher auch nach längerer Laufzeit verhältnismäßig schmal ist. Die Konizität der Laufflächenstege 4,5 wirkt sich weiterhin positiv auf den Ölverbrauch aus.

## Patentansprüche

1. Ölabstreifring, beinhaltend einen Grundkörper (2) mit einer radial äußeren Lauffläche (3), einer inneren Umfangsfläche (6) sowie einer oberen (7) und einer unteren Flanke (8), der mindestens zwei, bedarfsweise mit einer verschleißfesten Schicht versehene, Schenkel bildende (11,13) Laufflächenstege (4,5) aufweist,
wobei das freie Ende (10) der Laufflächenstege (4,5), ausgehend von einem ölraumseitigen Bereich (O) in Richtung eines brennraumseitigen Bereiches (B) abgeschrägt (12) ausgebildet ist,
wobei die jeweiligen Übergangsbereiche (b,c,d) einerseits vom abgeschrägten Bereich (12) des Laufflächensteges (4,5) in die Schenkel (11,13) und andererseits von den Schenkeln (11,13) in den Grundkörper (2) gerundet ausgebildet, d.h. mit definierten Radien versehen sind,
**dadurch gekennzeichnet, dass** sich die Laufflächenstege (4,5) radial in Richtung ihres einer Gegenlauffläche zugewandten Endes (10), vom Grundkörper (2) ausgehend, unter einem vorgebbaren Winkel (e,f) konisch verjüngen und dass die Winkel (e,f) unterschiedlich sind.

2. Ölabstreifring nach Anspruch 1, **dadurch gekennzeichnet, dass** der ölraumseitige Übergangsbereich vom konisch verlaufenden Schenkel (11) in den abgeschrägten Bereich (12) einen Radius (b) zwischen 0,05 und 0,20 mm aufweist.

3. Ölabstreifring nach Anspruch 1 oder 2, **dadurch gekennzeichnet, dass** der Übergangsbereich vom abgeschrägten Bereich (12) in den konisch verlaufenden Schenkel (13) des Laufflächensteges (4,5) einen Radius (c) zwischen 0,05 und 0,20 mm aufweist.

4. Ölabstreifring nach einem der Ansprüche 1 bis 3, **dadurch gekennzeichnet, dass** der Übergangsbereich vom konisch verlaufenden Schenkel (13) in den Grundkörper (2) einen Radius (d) zwischen 0,05 und 0,20 mm aufweist.

5. Ölabstreifring nach einem der Ansprüche 1 bis 4, **dadurch gekennzeichnet, dass** zwischen der oberen (7) und/oder der unteren Flanke (8) des Grundkörpers (2) und dem zugehörigen konisch verlaufenden Schenkel (11,13) ein Übergangsradius (a) von 0,05 bis 0,20 mm gegeben ist.

6. Ölabstreifring nach einem der Ansprüche 1 bis 5, **dadurch gekennzeichnet, dass** der dem Ölraum (O) zugewandte Schenkel (11) des Laufflächensteges (4,5), ausgehend vom Grundkörper (2), in Richtung des freien Endes (10) des Laufflächensteges (4,5) unter einem Winkel (e) von 0,5 bis 15° verläuft.

7. Ölabstreifring nach einem der Ansprüche 1 bis 6, **dadurch gekennzeichnet, dass** der dem Brennraum (B) zugewandte Schenkel (13) des Laufflächensteges (4,5), ausgehend vom Grundkörper (2), in Richtung des freien Endes (10) des Laufflächensteges (4,5) unter einem Winkel (f) von 0,55 bis 15° verläuft.

8. Ölabstreifring nach einem der Ansprüche 1 bis 7, **dadurch gekennzeichnet, dass** der ölraumseitige Schenkel (13) eine größere Steigung aufweist, als der brennraumseitige Schenkel (11).

9. Ölabstreifring nach einem der Ansprüche 1 bis 8, **dadurch gekennzeichnet, dass** der abgeschrägte Bereich (12), ausgehend vom Brennraum (B), in Richtung des Ölraumes (O) unter einem Winkel (g) von 5 bis 50° ansteigt.

10. Ölabstreifring nach einem der Ansprüche 1 bis 9, **dadurch gekennzeichnet, dass** der Laufflächensteg (4,5), ausgehend vom Grundkörper (2), eine Höhe (h) von 0,2 bis 0,8 mm aufweist.

11. Ölabstreifring nach einem der Ansprüche 1 bis 10, **dadurch gekennzeichnet, dass** der Radius (b) zwischen dem Schenkel (11) und der Abschrägung (12) 0,10 bis 0,15 mm beträgt.

12. Ölabstreifring nach einem der Ansprüche 1 bis 11, **dadurch gekennzeichnet, dass** der ölraumseitg vorgesehene, in Richtung des freien Endes (10) des Laufflächensteges (4,5) sich erstreckende Schenkel (11), ausgehend vom Grundköper (2), sich unter einem Winkel (e) von 8 bis 12° in Richtung des freien Endes (10) erstreckt.

13. Ölabstreifring nach einem der Ansprüche 1 bis 12, **dadurch gekennzeichnet, dass** der brennraumseitig vorgesehene, in Richtung des freien Endes (10) des Laufflächensteges (4,5) sich erstreckende Schenkel (13), ausgehend vom Grundkörper (2), sich unter einem Winkel (f) vom 8 bis 12° in Richtung des freien Endes (10) erstreckt.

14. Ölabstreifring nach einem der Ansprüche 1 bis 13, **dadurch gekennzeichnet, dass** der abgeschrägte Bereich (12) vom Brennraum (B) in Richtung des Ölraumes (O) unter einem Winkel (g) zwischen 25 und 40° ansteigt.

15. Ölabstreifring nach einem der Ansprüche 1 bis 14, **dadurch gekennzeichnet, dass** die radiale Höhe (h) des jeweiligen Laufflächensteges (4,5), bezogen auf den Grundkörper (2) zwischen 0,3 und 0,6 mm beträgt.

16. Ölabstreifring nach einem der Ansprüche 1 bis 15, **dadurch gekennzeichnet, dass** beide Laufflächenstege (4,5) im Wesentlichen gleiche geometrische Konturen aufweisen.

17. Ölabstreifring nach einem der Ansprüche 1 bis 16, **dadurch gekennzeichnet, dass** der Grundkörper (2) ein Gusseisenkolbenring ist oder dass der Grundkörper (2) aus Stahl besteht.

18. Ölabstreifring nach einem der Ansprüche 1 bis 17, **dadurch gekennzeichnet, dass** zumindest die Laufflächenstege (4,5) mit einer verschleißfesten Schicht versehen ist.

## Claims

1. An oil wiper ring comprising a base body (2) having a radial outer bearing surface (3), an inner circumferential surface (6) as well as an upper (7) and a lower flank (8), which base body comprises at least two bearing surface webs (4, 5) which form legs (11, 13) and which are in case of need provided with a wear resisting layer,
wherein the free end (10) of the bearing surface webs (4, 5) is chamfered (12) starting from a portion (O) on the side of the oil chamber in the direction of a portion (B) on the side of the combustion chamber,
wherein the respective transition areas (b, c, d) from the chamfered portion (12) of the bearing surface web (4, 5) into the legs (11, 13), on the one hand, and from the legs (11, 13) into the base body (2), on the other hand, are rounded, i.e. they are provided with defined radii,
**characterized in that** the bearing surface webs (4, 5) taper conically with a predeterminable angle (e, f) in a radial manner starting from the base body (2) into the direction of their end (10) facing a counter bearing surface and that the angles (e, f) are different.

2. An oil wiper ring according to claim 1, **characterized in that** the transition area on the side of the oil chamber from the conically extending leg (11) into the chamfered area (12) comprises a radius (b) comprised between 0.05 and 0.20 mm.

3. An oil wiper ring according to claim 1 or 2, **characterized in that** the transition area from the chamfered portion (12) into the conically extending leg (13) of the bearing surface web (4, 5) comprises a radius (c) comprised between 0.05 and 0.20 mm.

4. An oil wiper ring according to one of the claims 1 through 3, **characterized in that** the transition area from the conically extending leg (13) into the base body (2) comprises a radius (d) comprised between 0.05 and 0.20 mm.

5. An oil wiper ring according to one of the claims 1 through 4, **characterized in that** a transition radius (a) comprised between 0.05 and 0.20 mm is to be found between the upper (7) and/or the lower flank (8) of the base body (2) and the associated conically extending leg (11, 13).

6. An oil wiper ring according to one of the claims 1 through 5, **characterized in that** the leg (11) of the bearing surface web (4, 5) facing the oil chamber (O) extends with an angle (e) comprised between 0.5 and 15° from the base body (2) in the direction of the free end (10) of the bearing surface web (4, 5).

7. An oil wiper ring according to one of the claims 1 through 6, **characterized in that** the leg (13) of the bearing surface web (4, 5) facing the combustion chamber (B) extends with an angle (f) comprised between 0.55 and 15° from the base body (2) in the direction of the free end (10) of the bearing surface web (4, 5).

8. An oil wiper ring according to one of the claims 1 through 7, **characterized in that** the leg (13) on the side of the oil chamber comprises a greater slope than the leg (11) on the side of the combustion chamber.

9. An oil wiper ring according to one of the claims 1 through 8, **characterized in that** the chamfered portion (12) ascends with an angle (g) comprised between 5 and 50° from the combustion chamber (B) in the direction of the oil chamber (O).

10. An oil wiper ring according to one of the claims 1 through 9, **characterized in that** the bearing surface web (4, 5) comprises a height (h) comprised between 0.2 and 0.8 mm starting from the base body (2).

11. An oil wiper ring according to one of the claims 1 through 10, **characterized in that** the radius (b) between the leg (11) and the chamfer (12) is comprised between 0.10 and 0.15 mm.

12. An oil wiper ring according to one of the claims 1 through 11, **characterized in that** the leg (11) which extends in the direction of the free end (10) of the bearing surface web (4, 5) and which is provided on the side of the oil chamber extends from the base body (2) in the direction of the free end (10) with an angle (e) comprised between 8 and 12°.

13. An oil wiper ring according to one of the claims 1 through 12, **characterized in that** the leg (13) which extends in the direction of the free end (10) of the bearing surface web (4, 5) and which is provided on the side of the combustion chamber extends from the base body (2) in the direction of the free end (10) with an angle (f) comprised between 8 and 12°.

14. An oil wiper ring according to one of the claims 1 through 13, **characterized in that** the chamfered portion (12) ascends from the combustion chamber (B) in the direction of the oil chamber (O) with an angle (g) comprised between 25 and 40°.

15. An oil wiper ring according to one of the claims 1 through 14, **characterized in that** the radial height (h) of the respective bearing surface web (4, 5), with respect to the base body (2), is comprised between 0.3 and 0.6 mm.

16. An oil wiper ring according to one of the claims 1 through 15, **characterized in that** both bearing surface webs (4, 5) essentially comprise same geometric contours.

17. An oil wiper ring according to one of the claims 1 through 16, **characterized in that** the base body (2) is a cast iron piston ring or that the base body (2) is made of steel.

18. An oil wiper ring according to one of the claims 1 through 17, **characterized in that** at least the bearing surface webs (4, 5) are provided with a wear resisting layer.

## Revendications

1. Segment racleur d'huile comprenant un corps de base (2) ayant une surface de roulement (3) radialement extérieure, une surface circonférentielle intérieure (6) ainsi qu'un flanc supérieur (7) et inférieur (8), lequel comprend au moins deux entretoises de surface de roulement (4, 5) qui forment des branches (11, 13) et qui sont en cas de besoin munies d'une couche de résistance à l'usure,
dans lequel l'extrémité libre (10) des entretoises de surface de roulement (4, 5) est chanfreinée (12) à partir d'une zone (O) du côté de la chambre d'huile en direction d'une zone (B) du côté de la chambre d'explosion,
les zones de transition respectives (b, c, d) entre la partie chanfreinée (12) de l'entretoise de surface de roulement (4, 5) et des branches (11, 13), d'une part, et entre des branches (11, 13) et du corps de base (2), d'autre part, étant arrondies, i.e. elles sont munies des rayons définis,
**caractérisé en ce que** les entretoises de surface de roulement (4, 5) s'effilent de manière conique avec un angle pré-déterminable (e, f) et radialement à partir du corps de base (2) en direction de leur extrémité (10) faisant face à une contre-surface de roulement et que les angles (e, f) sont différents.

2. Segment racleur d'huile selon la revendication 1, **caractérisé en ce que** la zone de transition du côté de la chambre d'huile entre la branche (11) s'étendant de manière conique et la partie chanfreinée (12) comprend un rayon (b) compris entre 0,05 et 0,20 mm.

3. Segment racleur d'huile selon la revendication 1 ou 2, **caractérisé en ce que** la zone de transition entre la partie chanfreinée (12) et la branche (13) s'étendant de manière conique de l'entretoise de surface de roulement (4, 5) comprend un rayon (c) compris entre 0,05 et 0,20 mm.

4. Segment racleur d'huile selon l'une des revendications 1 à 3, **caractérisé en ce que** la zone de transition entre la branche (13) s'étendant de manière conique et le corps de base (2) comprend un rayon (d) compris entre 0,05 et 0,20 mm.

5. Segment racleur d'huile selon l'une des revendications 1 à 4, **caractérisé en ce qu'**il y a un rayon de transition (a) compris entre 0,05 et 0,20 mm entre le flanc supérieur (7) et/ou inférieur (8) du corps de base (2) et la branche (11, 13) associée s'étendant de manière conique.

6. Segment racleur d'huile selon l'une des revendications 1 à 5, **caractérisé en ce que**.la branche (11) de l'entretoise de surface de roulement (4, 5) qui fait face à la chambre d'huile (O) s'étend à partir du corps de base (2) en direction de l'extrémité libre (10) de l'entretoise de surface de roulement (4, 5) en formant un angle (e) compris entre 0,5 et 15°.

7. Segment racleur d'huile selon l'une des revendications 1 à 6, **caractérisé en ce que**.la branche (13) de l'entretoise de surface de roulement (4, 5) qui fait face à la chambre d'explosion (B) s'étend à partir du corps de base (2) en direction de l'extrémité libre (10) de l'entretoise de surface de roulement (4, 5) en formant un angle (f) compris entre 0,55 et 15°.

8. Segment racleur d'huile selon l'une des revendications 1 à 7, **caractérisé en ce que**.la branche (13) du côté de la chambre d'huile comprend une pente ascendante plus élevée que celle de la branche (11) du côté de la chambre d'explosion.

9. Segment racleur d'huile selon l'une des revendications 1 à 8, **caractérisé en ce que** la partie chanfreinée (12) monte à partir de la chambre d'explosion (B) en direction de la chambre d'huile (O) avec un angle (g) compris entre 5 et 50°.

10. Segment racleur d'huile selon l'une des revendications 1 à 9, **caractérisé en ce que** l'entretoise de surface de roulement (4, 5) comprend une hauteur (h) comprise entre 0,2 et 0,8 mm à partir du corps de base (2).

11. Segment racleur d'huile selon l'une des revendications 1 à 10, **caractérisé en ce que** le rayon (b) entre la branche (11) et le chanfrein (12) est compris entre 0,10 et 0,15 mm.

12. Segment racleur d'huile selon l'une des revendications 1 à 11, **caractérisé en ce que** la branche (11) qui s'étend en direction de l'extrémité libre (10) de l'entretoise de surface de roulement (4, 5) et qui est prévue du côté de la chambre d'huile s'étend à partir du corps de base (2) en direction de l'extrémité libre (10) en formant un angle (e) compris entre 8 et 12°.

13. Segment racleur d'huile selon l'une des revendications 1 à 12, **caractérisé en ce que** la branche (13) qui s'étend en direction de l'extrémité libre (10) de l'entretoise de surface de roulement (4, 5) et qui est prévue du côté de la chambre d'explosion s'étend à partir du corps de base (2) en direction de l'extrémité libre (10) en formant un angle (f) compris entre 8 et 12°.

14. Segment racleur d'huile selon l'une des revendications 1 à 13, **caractérisé en ce que** la partie chanfreinée (12) monte à partir de la chambre d'explosion (B) en direction de la chambre d'huile (O) en formant un angle (g) compris entre 25 et 40°.

15. Segment racleur d'huile selon l'une des revendications 1 à 14, **caractérisé en ce que** la hauteur radiale (h) de l'entretoise de surface de roulement respective (4, 5) est comprise entre 0,3 et 0,6 mm par rapport au corps de base (2).

16. Segment racleur d'huile selon l'une des revendications 1 à 15, **caractérisé en ce que** les deux entretoises de surface de roulement (4, 5) comprennent essentiellement les mêmes contours géométriques.

17. Segment racleur d'huile selon l'une des revendications 1 à 16, **caractérisé en ce que** le corps de base (2) est un segment de piston en fonte de fer ou que le corps de base (2) est composé d'acier.

18. Segment racleur d'huile selon l'une des revendications 1 à 17, **caractérisé en ce qu'**au moins les entretoises de surface de roulement (4, 5) sont munies d'une couche de résistance à l'usure.
